# EUROPEAN PATENT SPECIFICATION

(11) **EP 2 665 602 B1**
(45) Date of publication and mention of the grant of the patent: **22.03.2017**
(21) Application number: 12702688.8
(22) Date of filing: 20.01.2012
(51) Int. Cl.: B32B 25/10, B32B 5/12, B32B 3/24

(54) **ULTRA-RESILIENT PAD AND METHOD OF MAKING THEREOF**
ULTRA-ELASTISCHES MATERIAL UND VERFAHREN ZU DESSEN HERSTELLUNG
MATÉRIAU ULTRA-ÉLASTIQUE ET SON PROCÉDÉ DE PRODUCTION

(30) Priority: 21.01.2011 US 201113011605
(43) Date of publication of application: 27.11.2013
(73) Proprietor: Albany International Corporation, Albany, New York 12204 (US)
(72) Inventor: HANSEN, Robert, Muskegon MI 49445 (US); RYDIN, Bjorn, S-247 60 Veberod (SE)
(74) Representative: Novaimo
(86) International application number: PCT/US2012/022035
(87) International publication number: WO 2012/100166

(56) References cited:
- WO-A1-2004/005018
- WO-A2-2007/067949
- US-A- 4 931 358
- US-A1- 2004 219 854
- US-A1- 2008 166 533
- US-B1- 6 413 889

## Description

### FIELD OF THE INVENTION

The present invention relates to a compressible/resilient structure for various uses such as, for example, athletic shoes, regular shoes, boots, floor carpets, carpet pads, sports floors etc. The structure itself can be the final product or the structure can be a component of another structure. Uses envisioned include, but are not limited to: automobile parts and other composites; flooring; subfloors especially in gymnasiums or other sports arenas; press pads; ballistic cloth such as body armor or hurricane window protection; sporting equipment padding such as baseball catcher chest protectors; knee/elbow pads for runners, racers, skaters, volleyball players; cricket shin/knee pads; football hip pads; wall padding in stadiums, gymnasiums, arenas; shoe inserts (orthotics); heels/soles for athletic shoes e.g. running shoes; cushioning layer for bedding, vehicle seats, pillows; and other industrial uses where through thickness compressibility and resiliency is required.

### BACKGROUND OF THE INVENTION

While composites are usually a fiber reinforced resin matrix that is rigid and incompressible in all dimensions, certain uses such as for automobile bumpers require some flexibility and shock absorbing capability, plus the ability to return to the original shape once an impact force is removed. A bumper with the inventive structure as a layer, the structure layer free of resin in its interior to allow movement as desired, is an improvement over that currently used.

U.S. application No. 2007/0202314, PCT application WO 2007/067949 and U.S. application No. 2007/0194490 are examples where "crossless" structures are used as the substrate. Substitution of the present invention for at least some of these layers, the inventive layers not impregnated with resin to allow through thickness compression and spring back, results in an improved structure.

The present invention can also be used as shoe inserts or orthotic inserts, which are usually molded solid resin. Incorporation of a layer of the present invention improves the cushioning effect thereof. Soles/heels for sports shoes are usually solid viscoelastomeric materials, and some attempts to improve "cushioning" have been to mold in for example "air channels or pockets." However, the rigidity of the molded material is such that cushioning effects are limited. Incorporation of the present invention as a layer in the cast structure, free of "resin" to allow movement, substantially improves the cushioning effect of running/athletic shoes.

Therefore, it would be an advancement in the state of the "pad-making" art to provide a pad that provides excellent elastic behavior under load with high through thickness recovery.

### SUMMARY OF THE INVENTION

The present invention is a 'shock-absorbing pad' that utilizes a unique structure which provides extremely elastic behavior under load with high through thickness recovery. The instant structure utilizes an elastic media, which allows the entire structure to 'collapse' into itself based primarily upon the elasticity of this media and the structure to conform under pressure, and to rebound to its initial uncompressed thickness, thus allowing this unique behavior.

An object of the invention is to provide a structure that has improved recovery characteristics over memory foams, gels, spring systems, etc.

Another object of the invention is to form a smooth and uniform surface over the pad in order to improve support for the shoe and the foot.

Yet another object of the invention is to form a 'planar,' crossless structure of yarns with improved support of the carpet/sport floor/floor material.

Yet another object of the invention is to provide excellent retention of the recovery/dampening characteristics by utilizing the elastic material's 'full' recovery within the structure, as opposed to straight compression of materials. This is achieved due to the structure providing support between the sections of the elastic material, which avoids 'overstressing' the material, keeping it 'alive' and resulting in a longer useful lifetime.

Yet another object of the invention is to provide excellent resistance to moisture damage or problems due to water holding in certain applications due to the self-cleaning effect due to compression and subsequent recovery.

Yet another object of the invention is to provide an excellent compression recovery versus weight ratio, allowing significant dampening capability with light weight structures.

Yet another object of the invention is to provide excellent 'breathability' of the shock absorbing structure, allowing perspiration and other moisture to evaporate and/or be removed during the compression phase.

Accordingly, one embodiment of the invention is an ultra-resilient pad for use in sports shoes, running shoes, regular shoes, boots etc. The invention according to another embodiment is an ultra-resilient 'carpet pad' for use in floor carpets, sports floor, floor coverings etc. An elastic nonwoven extruded film or sheet that is defined as elastic, compressible, and resilient in its thickness direction, and extensible, bendable, and ultra-resilient in its length and transverse directions is required for all the embodiments discussed herein. The elastic nonwoven extruded film or sheet can optionally be perforated so as to have a plurality of through holes distributed in a predetermined symmetric pattern or in a random asymmetric pattern. The elastic nonwoven extruded film or sheet can be composed of any elastic material, such as thermoplastic polyurethane (TPU) or any other elastic material. Examples of good elastic materials include, but are not limited to, polymers such as polyurethane, rubber, silicone or that sold under trademarks Lycra® by Invista or Estane® by Lubrizol. The through holes formed in the elastic nonwoven film or sheet may have a suitably sized circular or non-circular shape. The non-circular shapes may include, but are not limited to, square, rectangular, triangular, elliptical, trapezoidal, hexagonal and other polygonal shapes.

A first embodiment employs a structure in its simplest form described as follows. Layer (1), which is the uppermost layer, is an array of parallel yarns, including any type of yarn as known by ordinarily skilled artisans, although polyamide would be a desired polymer choice. These yarns can be of any size, shape, material or form as required for the particular application known to those skilled in the art, for example, they can have a circular or non-circular cross-sectional shape including, but not limited to, square, rectangular, triangular, elliptical, trapezoidal, hexagonal and other polygonal shape. The next layer (2) is the required elastic nonwoven extruded film or sheet. A third layer (3) is also a parallel array of yarns that are located on the opposite side of layer (2); however, the yarns in layer (3) are arranged such that each layer (3) yarn lines up with the space between two adjacent layer (1) yarns causing what is called "nesting." The layers of the structure can be held together in any manner known to one of ordinary skill in the art. For instance, they can be attached using a fibrous layer, or the yarns in one layer can be attached to the elastic nonwoven extruded film or sheet in an adjacent layer at the point where they touch the extruded film or sheet via use of glues, adhesives, or a thermal fusion/welding method as known to those skilled in the art.

Note yarn systems (1) and (3) can be the same as each other or they can be different in terms of material, form, shape, etc. It is only required that the yarns in layer (3) are spaced to fit between adjacent yarns of layer (1) or vice versa.

Also note there does not have to be a one to one relationship between the number of yarns of layers (1) and (3), and the number of yarns in layer (3) can be only a fraction of the number of yarns in layer (1) or vice versa. For example, layer (3) may contain only half the yarns of layer (1) so that there are spaces between the yarns of layer (3) in use.

Other functional layers can also be attached, for example by lamination, for either functionality or property enhancement of the final structure. For example, one or more cross-directional yarn arrays may be attached on top of layer (1) or under layer (3) to provide cross-directional stability. The cross-directional yarns in one layer can be attached to the surface in an adjacent layer at points where they touch each other via use of glues, adhesives, or thermal fusion/welding methods known to those skilled in the art. One or more layers of fibrous batt may be applied to this structure by methods known to those skilled in the art to enhance bonding between the layers. As a further example, a functional coating may be applied on one or both sides of the structure to improve resistance to contamination and/or abrasion, for example.

Accordingly, one exemplary embodiment of the present invention is a compressible ultra-resilient pad comprising one or more layers of an elastic nonwoven extruded film or sheet, wherein the nonwoven extruded film or sheet is elastic, resilient, and compressible in a thickness direction and extensible, bendable, and ultra-resilient in the length and transverse directions, and two or more layers of a plurality of substantially parallel longitudinal yarns attached on either side of the nonwoven extruded film or sheet so as to allow "nesting" of the parallel longitudinal yarns from one layer between the parallel longitudinal yarns of the other layer. The pad can also include one or more layers of a plurality of substantially parallel cross-directional yarns attached on the outside of the two or more layers of parallel longitudinal yarns.

Another exemplary embodiment of the present invention is a compressible ultra-resilient pad comprising (a) a first layer of a plurality of substantially parallel yarns, (b) a second layer of an elastic nonwoven extruded film or sheet, wherein the nonwoven extruded film or sheet is elastic, resilient, and compressible in a thickness direction and extensible, bendable, and ultra-resilient in the length and transverse directions, (c) a third layer of a plurality of substantially parallel yarns, (d) a fourth layer of a plurality of substantially parallel cross-directional yarns, (e) a fifth layer of the nonwoven extruded film or sheet, (f) a sixth layer of a plurality of substantially parallel cross-directional yarns, and (g) a seventh layer of the nonwoven extruded film or sheet.

Yet another embodiment of the present invention is a method of forming a compressible ultra-resilient pad. The method includes providing one or more layers of an elastic nonwoven extruded film or sheet, wherein the nonwoven extruded film or sheet is elastic, resilient, and compressible in a thickness direction and ultra-resilient, extensible and bendable in the length and transverse directions, and attaching one or more layers of a plurality of substantially parallel longitudinal yarns on top of and under the nonwoven extruded film or sheet. The method can also include the step of attaching one or more layers of a plurality of substantially parallel cross-directional yarns on top of or under the one or more layers of parallel longitudinal yarns.

Yet another embodiment of the present invention is a method of forming a compressible ultra-resilient pad. The method includes (a) providing a first layer of a plurality of substantially parallel longitudinal yarns, (b) attaching a second layer of an elastic nonwoven extruded film or sheet on top of the first layer, wherein the nonwoven extruded film or sheet is elastic, resilient, and compressible in a thickness direction and extensible, bendable, and ultra-resilient in the length and transverse directions, (c) attaching a third layer of a plurality of substantially parallel longitudinal yarns on top of the second layer, (d) applying a fourth layer of a plurality of substantially parallel cross-directional yarns on top of the third layer, (e) applying a fifth layer of the nonwoven extruded film or sheet on top of the fourth layer, (f) applying a sixth layer of a plurality of substantially parallel cross-directional yarns on top of the fifth, and (g) applying a seventh layer of the nonwoven extruded film or sheet on top of the sixth layer.

In the disclosure and the embodiments herein, in the pad, the structure can be either a final product or the structure can be a component of another structure. The pad can be included in or can be a product selected from the group of products including footwear; shoes; athletic shoes; boots; flooring; carpets; carpet pads; sports floors; automobile parts; composites; subfloors; gymnasium subfloors; sports arena subfloors; press pads; ballistic cloth; body armor; hurricane window protection; padding; sporting equipment padding; baseball catcher chest protectors; knee/elbow pads; hip pads; wall padding; shoe inserts and orthotics; heels/soles for athletic shoes; a cushioning layer for bedding; and vehicle seats. The structure can also include a layer of material that allows a surface to be exchangeable; the material can be a hook and loop type surface.

In the disclosure and the embodiments herein, the layers of the structure can comprise a plurality of adjoining layers comprising the elastic material.

For a better understanding of the invention, its operating advantages and specific objects attained by its uses, reference is made to the accompanying descriptive matter in which preferred, but non-limiting, embodiments of the invention are illustrated.

Terms "comprising" and "comprises" in this disclosure can mean "including" and "includes" or can have the meaning commonly given to the term "comprising" or "comprises" in US Patent Law. Terms "consisting essentially of' or "consists essentially of" if used in the claims have the meaning ascribed to them in U.S. Patent Law. Other aspects of the invention are described in or are obvious from (and within the ambit of the invention) the following disclosure.

### BRIEF DESCRIPTION OF THE DRAWINGS

Thus by the present invention its objects and advantages will be realized, the description of which should be taken in conjunction with the drawings wherein:
Figure 1 shows an ultra-resilient shoe pad, according to one embodiment of the invention;
Figure 2 shows installation of the ultra-resilient shoe pad within a shoe, according to one embodiment of the invention;
Figures 3(a)-3(c) illustrate a method of making a compressible ultra-resilient pad, according to one embodiment of the present invention;
Figure 4 is a profile view of a compressible ultra-resilient pad, according to one embodiment of the present invention;
Figure 5 is a cross-sectional view of the pad shown in Figure 4;
Figure 6 is an exaggerated view of the pad shown in Figure 5 under normal load;
Figure 7 is a cross-sectional view of a compressible ultra-resilient pad, according to one embodiment of the present invention;
Figures 8(a)-8(c) are cross-sectional views of a compressible ultra-resilient pad, according to one embodiment of the present invention; and
Figures 9 is a cross-sectional view of a compressible ultra-resilient pad after needling a batt layer, according to one embodiment of the present invention.

### DETAILED DESCRIPTION OF THE INVENTION

The invention, according to one embodiment, is a 'shock-absorbing' pad that utilizes a unique structure which provides extremely elastic behavior under a normal pressure load with high caliper recovery. This structure 10 utilizes an elastic media, which allows the entire structure to 'collapse' into itself, based upon the elasticity of this media and the base fabric structure to conform under pressure, and then recover to substantially the same original form and thickness, thus allowing a unique behavior.

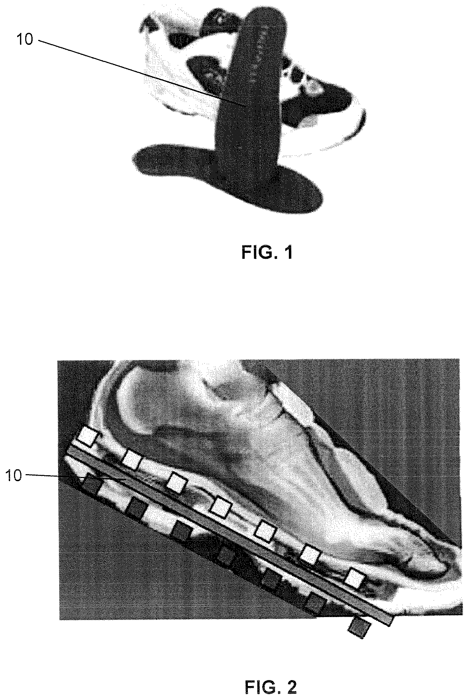

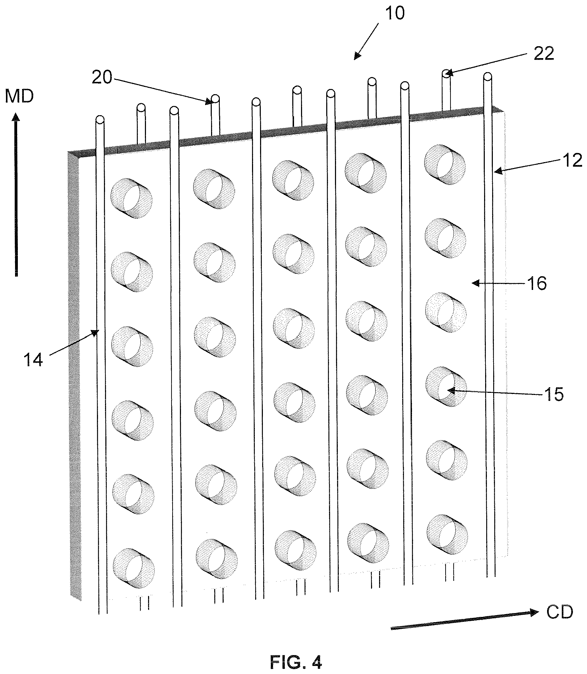

One embodiment of the invention is shown in Fig. 1, which is a shoe pad 10 for use in shoes such as sports shoes, running shoes, regular shoes, boots etc. Fig. 2 illustrates the installation of the shoe pad 10 into foot wear, for example, a shoe. Fig. 4 is a 'top view' of the structure according to one example of the invention, also referred to as the base fabric, looking from above the fabric.

An elastic nonwoven extruded film or sheet that is defined as elastic, resilient, and compressible in its thickness direction and extensible, bendable, and resilient in its length and transverse directions is required for all the embodiments discussed herein. The elastic nonwoven extruded film or sheet can optionally be perforated so as to have a plurality of through holes or voids distributed in a predetermined symmetric pattern or in a random asymmetric pattern. The elastic nonwoven extruded film or sheet can be composed of any elastic material, such as thermoplastic polyurethane (TPU) or any other elastic material. Examples of good elastic materials include, but are not limited to, polymers such as polyurethane, rubber, silicone or that sold under trademarks Lycra® by Invista or Estane® by Lubrizol. The through holes formed in the nonwoven film or sheet may have a suitably sized circular or non-circular shape. The non-circular shapes may include, but are not limited to, square, rectangular, triangular, elliptical, trapezoidal, hexagonal and other polygonal shapes. Holes can be formed in the film or sheet when it is extruded, or they can be mechanically punched or thermally formed after the film or sheet is extruded.

One exemplary embodiment of the present invention is a compressible ultra-resilient pad including one or more layers of an elastic nonwoven extruded film or sheet, wherein the nonwoven extruded film or sheet is elastic, resilient, and compressible in a thickness direction and extensible, bendable, and resilient in the length and transverse directions, and one or more layers of a plurality of substantially parallel functional longitudinal yarns attached on top of and under the nonwoven extruded film or sheet. The pad can also include one or more layers of a plurality of substantially parallel cross-direction yarns attached on the outside of the one or more layers of parallel longitudinal yarns.

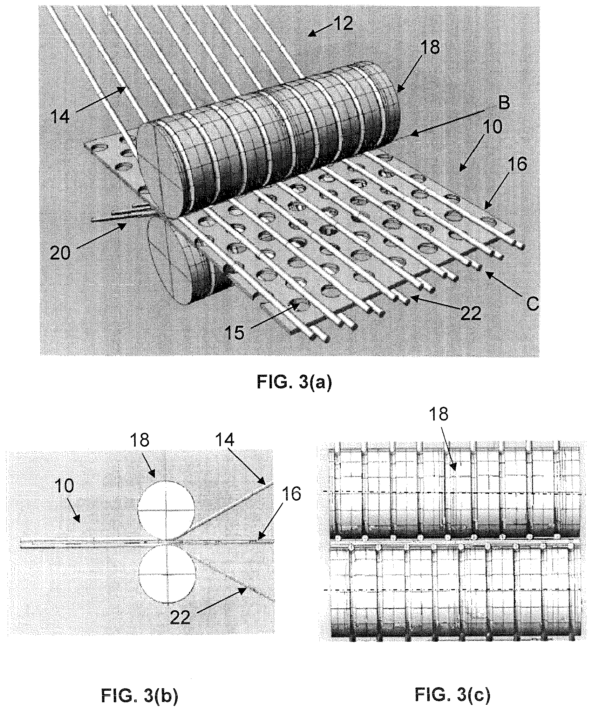

Turning now more particularly to the drawings, a method of making a pad base structure 10 is shown, for example, in Figures 3(a)-3(c), wherein a first or top (1) layer 12 comprised of functional yarns 14 in a parallel array is oriented in the longitudinal direction. They can be of any size, shape, material or form suitable for the purpose. This applies to all the yarns referred to herein. For example, the functional yarns can have a circular or non-circular cross-sectional shape including, but not limited to, square, rectangular, triangular, elliptical, trapezoidal, hexagonal and other polygonal shape.

A second or middle (2) layer 16 of an elastic nonwoven extruded film or sheet 16 having the elastic features as aforesaid is provided. As aforementioned, the elastic nonwoven extruded film or sheet 16 can optionally be perforated so as to have a plurality of through holes 15 distributed in a predetermined symmetric pattern or in a random asymmetric pattern. The elastic nonwoven extruded film or sheet 16 can be composed of any elastic material, such as thermoplastic polyurethane (TPU) or any other elastic material. Examples of good elastic materials include, but are not limited to, polymers such as polyurethane, rubber, silicone or that sold under trademarks Lycra® by Invista or Estane® by Lubrizol. The through holes 15 formed in the nonwoven film or sheet 16 may have a suitably sized circular or non-circular shape. The non-circular shapes may include, but are not limited to, square, rectangular, triangular, elliptical, trapezoidal, hexagonal and other polygonal shapes. Holes 15 can be formed in the film or sheet when it is extruded, or they can be mechanically punched or thermally formed after the film or sheet is extruded.

A third or bottom (3) layer 20 comprised of functional yarns 22 is provided in the form of a parallel array on the other side of layer 16. As it can be seen, yarns 22 in layer 20 are positioned or aligned within the spaces between adjacent yarns 14 in top (1) layer 12. This is more apparently seen in Figure 3(c), which is a front view of the process set up shown in Figure 3(a) along arrow C. Figure 3(b) is a side view of the process set up shown in Figure 3(a) along arrow B. As seen in Figures 3(a) and 3(c), yarn guiding cylinders or rolls 18 have a grooved outer surface, and the grooves may be spaced apart so as to accommodate and guide the yarns 14, 22 onto the nonwoven sheet 16, such that each layer 12 yarn lines up within the space between two adjacent layer 20 yarns.

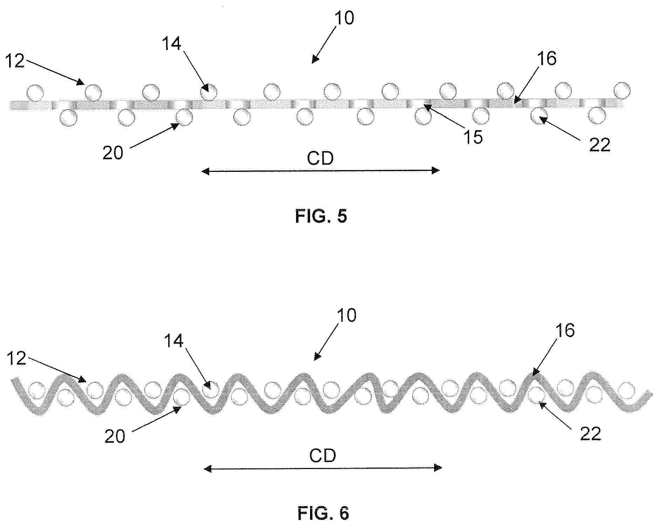

A schematic of a compressible ultra-resilient pad formed according to this exemplary embodiment is shown in Figure 4. As shown, base structure 10 has a first or top (1) layer 12 comprised of functional yarns 14 in a parallel array oriented in the longitudinal direction, a second or middle (2) layer 16 of a nonwoven extruded film or sheet 16 having the elastic features as aforesaid, and a third or bottom (3) layer 20 comprised of functional yarns 22 is provided in the form of a parallel array on the other side of layer 16. Yarns 22 in layer 20 are positioned or aligned within the spaces between adjacent yarns 14 in top (1) layer 12 as described above. A cross-sectional view of the base structure 10 is shown in Figure 5, for example.

The layers of the structure can be held together in any manner known to one of ordinary skill in the art. For instance, they can be attached using a fibrous batt layer, or the yarns in one layer can be attached to the nonwoven extruded film or sheet in an adjacent layer at the point where they touch the extruded film or sheet via use of glues, adhesives, or a thermal fusion/welding method as known to those skilled in the art.

Note yarn systems (1) and (3) can be the same as each other or they can be different in terms of material, form, shape, etc. It is only required that the yarns in layer (3) are spaced to fit between adjacent yarns of layer (1) or vice versa.

Also note there does not have to be a one to one relationship between the number of yarns of layers (1) and (3), and the number of yarns in layer (3) can be only a fraction of the number of yarns in layer (1) or vice versa. For example, layer (3) may contain only half the yarns of layer (1) so that there are spaces between the yarns of layer (3) in use.

Upon application of a compressive load on the pad, the nonwoven extruded layer 16 compresses and stretches around functional yarns 14, 22, allowing the yarns 14 and 22 to move towards each other and to "nest" between each other, virtually almost in the same plane. At this point, nonwoven extruded layer 16 conforms to this nesting, and bends and flattens around yarns 14, 22 in the top layer 12 and bottom layer 20. For ease of comprehension, an exaggerated view of base structure 10 in such a state is shown in Figure 6, for example. Upon release of the load, due to the elastic and resilient behavior of the extruded layer 16, it will cause the yarn layers 12 and 20 to move apart from each other or "spring back", returning the pad to its desired thickness and openness. Therefore, a pad having a total thickness of the thickness of yarns 14 plus the thickness of yarns 22 plus the thickness of nonwoven extruded layer 16 under a normal uncompressed state is compressible and ultra-resilient to almost an entire yarn thickness, i.e. the thickness lost due to compression is some portion of the nonwoven extruded layer 16, and the pad in compression can be almost as thin as the thicker (larger) diameter of yarn 14 or 22.

It is important to note that the member arrays of layers 12 and 20 can also be oriented in the cross-direction in the pad in use so long as the elastic nonwoven film or sheet 16 separates and is in between these layers, and at least one functional layer on the outer side of the pad is oriented in the longitudinal direction to bear any tensile load and provide adequate strength and stretch resistance to the structure in use. Additional functional yarns 14, 22 can be in oriented in longitudinal direction, cross-direction or in both directions, depending on the end use of the structure. For example, in applications such as a ballistic cloth, which may require added impact resistance, functional yarns 14, 22 may be disposed in both longitudinal and cross-directions. It is also important to note that although functional yarns 14, 22 are illustrated as having a round cross-section in some figures, they can be of any size, shape, material or form suitable for the purpose.

Another embodiment employs a similar principle as above, but the structure includes a fourth layer (4) of the nonwoven extruded film or sheet on the opposite side of the third layer (3) as the second layer, and a fifth layer (5) of parallel yarns in the same direction as the first layer (1). In this embodiment, the yarns of the fifth layer (5) are aligned in the same vertical plane in a through thickness direction as that of the first layer (1).

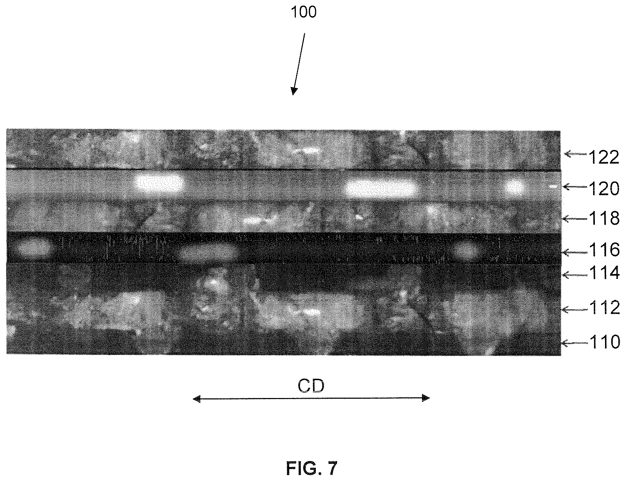

Another variant of the instant "crossless" structure is shown in Figure 7, in which the base substrate 100 is shown comprising seven layers in generally parallel planes with each layer comprising a plurality of parallel yarns/members and the necessary elastic nonwoven extruded films or sheets. The compressible ultra-resilient pad, according to this exemplary embodiment, includes (a) a first layer 110 of parallel longitudinal yarns, (b) a second layer 112 of the nonwoven extruded film or sheet, which is elastic, resilient, and compressible in a thickness direction and extensible, bendable, and ultra-resilient in its length and transverse directions, (c) a third layer 114 of parallel longitudinal yarns offset in the spaces between the yarns of the first layer 110, (d) a fourth layer 116 of parallel cross-direction yarns, (e) a fifth layer 118 of the nonwoven extruded film or sheet, (f) a sixth layer 120 of parallel cross-direction yarns offset in the spaces between yarns of the fourth layer 116, and (g) a seventh layer 122 of the nonwoven extruded film or sheet. In other words, the yarns of the first and third layer 110, 114 are oriented in a longitudinal direction, for example, while the yarns of the fourth and sixth layers 116, 120 are oriented in a cross-direction, for example. It should be noted, however, that seventh layer 122 is purely optional, and may not be necessary for proper functioning of this embodiment. Layer 122 may have through holes or voids and/or layer 122 may have some additional texture provided by laser graving or etching, for example.

As shown in Figure 7, longitudinal direction functional yarns 114 in the third layer are spaced apart in the manner described above such they fall between the yarns 110 of the first layer, thereby causing the "nesting" described above. Similarly, cross-direction functional yarns 116 in the fourth layer are spaced apart such they fall between the yarns 120 of the sixth layer, thereby causing the "nesting" described above. Though the embodiment described herein has the first and third layer oriented in the longitudinal direction, the fourth and sixth layer oriented in the cross-direction, and the nonwoven extruded film or sheet placed in the second, fifth and seventh layers, the layers can be interchangeably used, so long as there is at least one layer of the elastic nonwoven extruded film or sheet between like yarn layers (layers oriented in the same direction) to provide the compressible and ultra-resilient property, and at least one longitudinal direction layer of tensile load bearing yarns to provide adequate strength and stretch resistance to the pad in use. Again yarns in all these layers can be the same or different from each other in form, material, shape, etc.

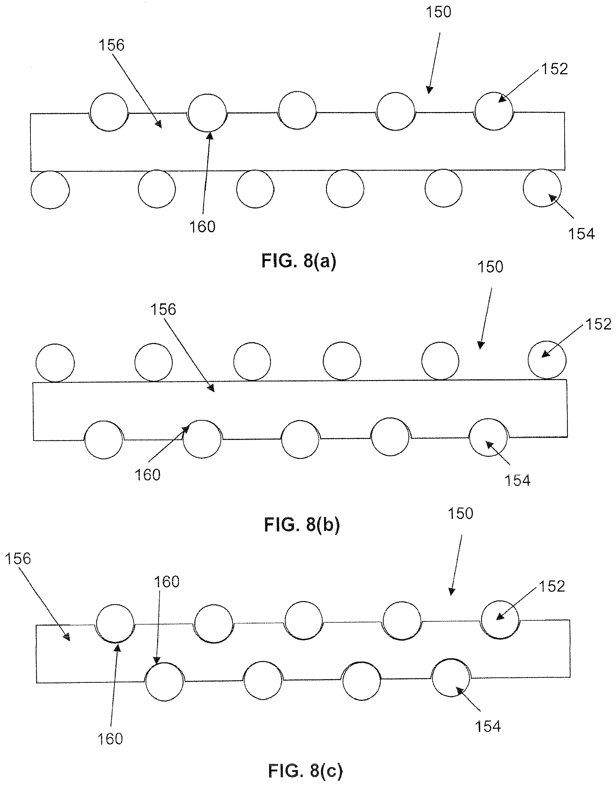

According to one exemplary embodiment, the nonwoven extruded film or sheet, which is elastic, resilient, and compressible in a thickness direction and extensible, bendable, and resilient in its length and transverse directions may have continuous grooves formed on a surface thereof to partially embed the yarns in the grooves, and to ensure uniform spacing of the yarns, such as that shown in Fig. 8(a)-(c). This feature allows the use of a thicker film or sheet layer without increasing the thickness of the overall pad. For example, the nonwoven extruded film or sheet 156 may have grooves 160 formed on its top surface as shown in Figure 8(a), where longitudinal or cross-direction yarns 152 are partially embedded into grooves 160 and can be uniformly spaced. Alternatively, the nonwoven extruded film or sheet 156 may have grooves 160 formed on its bottom surface as shown in Figure 8(b) where longitudinal or cross-direction yarns 154 on the bottom side are partially embedded into grooves 160 and can be uniformly spaced. As a further alternative, the nonwoven extruded film or sheet 156 may have grooves 160 formed on both its surfaces as shown in Figure 8(c), where longitudinal or cross-direction yarns 152, 154 are partially embedded into grooves 160 and can be uniformly spaced on both sides of the film or sheet layer 156. Although grooves may be helpful in ensuring uniform spacing of the yarns, such a feature is not essential for the proper function of the inventive pad. Grooves 160 are depicted as having a 'C' or semi-circular shape only as an example, i.e. grooves 160 can have any cross-sectional shape including, but not limited to, square, rectangular, triangular, elliptical, trapezoidal, hexagonal and other polygonal shapes, suitable to accommodate the yarns embedded therein.

In all of the embodiments described herein, the longitudinal direction or cross-direction yarns in one layer can be attached to the nonwoven extruded film or sheet in an adjacent layer or to each other at contact points where they contact each other via use of glues, adhesives, or a thermal fusion/welding method as known to those skilled in the art. Alternatively, the longitudinal direction and/or cross-direction yarns are attached to the nonwoven extruded films or sheets by needling one or more layers of a fibrous batt material through the structure from either or both outside surfaces.

The longitudinal direction and cross-direction yarns used in the present invention are preferably monofilaments, although other forms such as multifilaments, plied monofilaments or multifilaments, wrapped members comprising different materials, knitted members, twisted members, multicomponent members, and braided members can also be used in the practice of the invention. In structures where monofilaments are used, the monofilaments can have any cross-sectional shape, such as for example, circular, non-circular, square, rectangular, triangular, elliptical, polygonal, trapezoidal or lobate. Similarly, filaments used in twisted, knitted, or braided members can also be non-round in cross-sectional shape. The monofilaments in all of the above structures preferably have an effective diameter in the range of 0.8-4.0mm, for example.

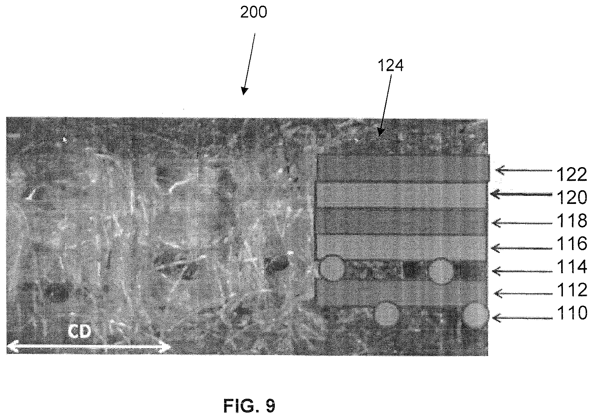

Any of the pads discussed above can include one or more layers of a fibrous batt material, which can be needled into the pad to hold the various layers together. For example, pad 100 in the above embodiment can be needled using a fibrous batt material 124 to form a consolidated structure 200, such as that shown in Figure 9, for example. Figure 9 is a cross-sectional view of the pad after needling a batt material 124, according to one embodiment of the present invention. The needled batt material 124 may optionally be partially or fully melted for increased bonding between the layers. The fibrous batt material can be composed of any polymer, such as for example, polyester, polyurethane, polypropylene, polyamide, forms thereof and combinations thereof. Additionally, the top and/or bottom surface of the final pad can be coated with a polymeric resin or foam or partially or fully fused particulates, which may partially or fully impregnate the pad.

Also the degree of compression/ resiliency is controlled by the elasticity or compressibility of the required nonwoven extruded film or sheet, number of layers of the elastic film or sheet, and of course the totality of the structure itself. The placement of the nonwoven extruded film or sheet must be such that the nonwoven extruded film or sheet compresses upon a normal load being applied to the base pad, and the base pad 'springs back' upon removal of that load. The inventive structure can also be part of a laminate with other yarn arrays or base pads attached thereto.

The fabric as aforementioned can be needled, if necessary, with fibers to produce a smooth surface, and can be coated with foams, polymeric coatings, or partially or fully fused particulates. Other embodiments can include a membrane, a yarn array, or another fabric can be laminated to the pad. The pad must be constructed to have a sufficient degree of compressibility as well as have sufficient elasticity as well as strength to allow the structure to rebound, or 'spring back.' In all of the embodiments described herein, the term "yarn" may refer to a conventional textile yarn, such as a monofilament or multifilament, or it may refer to a "tape from a slit film," or any other "member" that can be used in place of a functional yarn. As described earlier, the functional yarns can be in oriented in longitudinal direction, cross-direction or in both directions, depending on the end use of the structure. The compression and rebounding of the structure has the following benefits:
1.) Improved recovery characteristics over memory foams, gels, spring systems, etc,
2.) Smooth and uniform surface characteristics in, for example, items having 'planar,' crossless structure of yarns. (e.g.: to allow for improved support of the shoe and the foot).
3.) Excellent retention of the recovery/dampening characteristics due to the geometry of the pad including the elastic material's 'full' recovery within the structure (as opposed to straight compression of materials). This is due to the structure providing support between the sections of the elastic material; this avoids 'overstressing' the material, keeping it 'alive' (e.g., for a longer useful lifetime).
4.) Excellent resistance to moisture damage or problems due to water holding due to self-cleaning effect of compression and recovery.
5.) Excellent compression recovery vs. weight ratio, allowing significant dampening capability with light weight.
6.) Excellent 'breathability' of the shock absorbing structure, allowing perspiration and other moisture to evaporate and/or be removed by the compression/recovery cycle.

The pad structures disclosed herein may be used in sports shoes, running shoes, regular shoes, boots etc., or can be used in floor carpets, sports floor, floor coverings etc. The structure itself can be the final product or the structure can be a component of another structure. Uses envisioned include, but are not limited to: automobile parts and other composites; flooring; subfloors especially in gymnasiums or other sports arenas; press pads; ballistic cloth such as body armor or hurricane window protection; sporting equipment padding such as baseball catcher chest protectors; knee/elbow pads for runners, racers, skaters, volleyball players; cricket shin/knee pads; football hip pads; wall padding in stadiums, gymnasiums, arenas; shoe inserts (orthotics); heels/soles for athletic shoes e.g. running shoes; cushioning layer for bedding, vehicle seats, pillows; and other industrial uses where through thickness compressibility and resiliency is required.

Modifications to the present invention would be obvious to those of ordinary skill in the art in view of this disclosure, but would not bring the invention so modified beyond the scope of the appended claims.

## Claims

1. A compressible ultra-resilient pad comprising:
a first layer of a plurality of substantially parallel longitudinal yarns;
a second layer of an elastic nonwoven extruded film or sheet on one side of the first layer, wherein the nonwoven extruded film or sheet is elastic, resilient, and compressible in a thickness direction, and extensible, bendable and resilient in its length and transverse directions ;
a third layer of a plurality of substantially parallel yarns on the opposite side of the second layer as the first layer and running in the same direction as those of the first layer, and
wherein the parallel yarns of the third layer are aligned such that they nest between the spaces created between the parallel yarns of the first layer.

2. The ultra-resilient pad as claimed in claim 1, wherein the number of yarns in the third layer is less than the number of yarns in the first layer or vice versa.

3. The ultra-resilient pad as claimed in one of the previous claims, further comprising:
a fourth layer of the elastic nonwoven extruded film or sheet on the opposite side of the third layer as the second layer; and
a fifth layer of parallel yarns in the same direction as the first layer, wherein the yarns of the fifth layer are aligned in the same vertical plane in a through thickness direction as that of the first layer.

4. The ultra-resilient pad as claimed in claim 1, further comprising:
one or more layers of a plurality of substantially parallel cross-direction yarns attached on top of or under the one or more layers of parallel longitudinal direction yarns.

5. The ultra-resilient pad as claimed in one of the previous claims, wherein
the longitudinal direction and/or cross-direction yarns are selected from the group consisting of monofilaments, multifilaments, plied monofilaments or multifilaments, wrapped members comprising different materials, knitted members, twisted members, multicomponent members, and braided members.

6. The ultra-resilient pad as claimed in one of the previous claims, wherein
the elastic nonwoven extruded film or sheet comprises a polymeric material.

7. The ultra-resilient pad as claimed in claim 6, wherein the polymeric material is selected from the group consisting of: a polyurethane, a rubber, and silicone.

8. The ultra-resilient pad as claimed in one of the previous claims, wherein
the longitudinal direction and/or cross-direction yarns have a cross-section selected from the group consisting of: circular, non-circular, square, rectangular, triangular, elliptical, polygonal, trapezoidal, and lobate.

9. The ultra-resilient pad as claimed in one of the previous claims, wherein
the elastic nonwoven extruded film or sheet is perforated with a plurality of through holes.

10. The ultra-resilient pad as claimed in claim 9, wherein the through holes have a shape selected from the group consisting of: circular, non-circular, square, rectangular, triangular, elliptical, trapezoidal, polygonal, and lobate.

11. The ultra-resilient pad as claimed in one of the previous claims, further
comprising one or more layers of a fibrous batt material.

12. The ultra-resilient pad as claimed in claim 11, wherein the fibrous batt material is needled into the ultra-resilient pad.

13. The ultra-resilient pad as claimed in claim 11, wherein the fibrous batt material is applied on a top and/or bottom surface of the ultra-resilient pad, and needled therethrough.

14. The ultra-resilient pad as claimed in claim 4, wherein the longitudinal direction yarns and/or cross-direction yarns have a yarn diameter in the range of 0.08-4.0mm.

15. The ultra-resilient pad as claimed in claim 4, wherein the one or more layers of longitudinal direction and/or cross-direction yarns are thermally welded or glued to the one or more layers of nonwoven extruded film or sheet.

16. The ultra-resilient pad as claimed in claim 1, further comprising :
a fourth layer of a plurality of substantially parallel cross-direction yarns;
a fifth layer of the elastic nonwoven extruded film or sheet;
a sixth layer of a plurality of substantially parallel cross-direction yarns that are offset in the spaces between yarns of the fourth layer; and
a seventh layer of the elastic nonwoven extruded film or sheet.

17. The ultra-resilient pad as claimed in claim 1 or 16, wherein the layers of the ultra-resilient pad are needled together using one or more layers of a fibrous batt material.

18. The ultra-resilient pad as claimed in claim 1 or 16, wherein the layers of the ultra-resilient pad are attached together by needling therethrough one or more layers of a fibrous batt material, and at least partially melting the batt material.

19. The ultra-resilient pad as claimed in claim 1 or 16, wherein a top and/or bottom surface of the ultra-resilient pad is coated with a polymeric resin material, foam, or partially or fully fused particles.

20. The ultra-resilient pad as claimed in claim 19, wherein the polymeric resin at least partially impregnates the ultra-resilient pad.

21. The ultra-resilient pad as claimed in claim 1 or 16, wherein the nonwoven extruded layer has continuous grooves formed on one or both its surfaces.

22. The ultra-resilient pad as claimed in claim 21, wherein the grooves have a cross-sectional shape selected from the group consisting of semi-circle, square, rectangular, triangular, elliptical, trapezoidal, hexagonal and other polygonal shapes.

23. A method of forming a compressible ultra-resilient pad, the method comprising the steps of:
providing a first layer of a plurality of substantially parallel longitudinal yarns;
attaching a second layer of an elastic nonwoven extruded film or sheet on one side of the first layer, wherein the nonwoven extruded film or sheet is elastic, resilient, and compressible in a thickness direction, and extensible, bendable, and resilient in its length and transverse directions ; and
attaching a third layer of a plurality of substantially parallel yarns on the opposite side of the second layer as the first layer and running in the same direction as those of the first layer,
wherein the parallel yarns of the third layer are aligned such that they nest between the spaces created between the parallel yarns of the first layer.

24. The method as claimed in claim 23, further comprising the steps of:
applying a fourth layer of the elastic nonwoven extruded film or sheet on the opposite side of the third layer as the second layer; and
attaching a fifth layer of parallel yarns in the same direction as the first layer, wherein the yarns of the fifth layer are aligned in the same vertical plane in a through thickness direction as that of the first layer.

25. The method as claimed in claim 23 or 24, further comprising the step of attaching one or more layers of a plurality of substantially parallel cross-direction yarns on top of or under the one or more layers of parallel longitudinal direction yarns.

26. The method as claimed in one of claims 23 to 25, wherein the elastic nonwoven extruded film or sheet is perforated with a plurality of through holes.

27. The method as claimed in claim 23, further comprising the step of applying one or more layers of a fibrous batt material to a top and/or bottom surface of the ultra-resilient pad.

28. The method as claimed in claim 27, further comprising the step of needling therethrough the fibrous batt material into the ultra-resilient pad.

29. The method as claimed in claim 27 or 28, further comprising the step of coating a top and/or bottom surface of the ultra-resilient pad with a polymeric resin, foam, or partially or fully fused particles.

30. The method as claimed in claim 29, wherein the polymeric resin at least partially impregnates the ultra-resilient pad.

31. The method as claimed in one of claims 27 to 30, further comprising the step of attaching the one or more layers of longitudinal direction and/or cross-direction yarns to the one or more layers of nonwoven extruded film or sheet by thermal welding or gluing.

32. The method as claimed in one of claims 27 to 30, further comprising the step of attaching the one or more layers of longitudinal direction and/or cross-direction yarns to the one or more layers of nonwoven extruded film or sheet by needling therethrough one or more layers of a fibrous batt material.

33. The method as claimed in claim 23, further comprising the steps of:
applying a fourth layer of a plurality of substantially parallel cross-direction yarns on top of the third layer;
applying a fifth layer of the elastic nonwoven extruded film or sheet on top of the fourth layer;
applying a sixth layer of a plurality of substantially parallel cross-direction yarns offset in the spaces between yarns of the fourth layer on top of the fifth layer; and
applying a seventh layer of the elastic nonwoven extruded film or sheet on top of the sixth layer.

34. The method as claimed in claim 33, further comprising the step of attaching the layers of the ultra-resilient pad together by needling therethrough one or more layers of a fibrous batt material.

35. The method as claimed in claim 33, further comprising the step of attaching the layers of the ultra-resilient pad by applying one or more layers of a fibrous batt material, and at least partially melting the batt material.

36. The method as claimed in claim 33, further comprising the step of coating a top and/or bottom surface of the ultra-resilient pad with a polymeric resin material, foam, or partially or fully fused particles.

37. The ultra-resilient pad of one of claims 1 to 22, wherein the pad is included in or is a product selected from the group of products including footwear; shoes; athletic shoes; boots; flooring; carpets; carpet pads; sports floors; automobile parts; composites; subfloors; gymnasium subfloors; sports arena subfloors; press pads; ballistic cloth; body armor; hurricane window protection; padding; sporting equipment padding; baseball catcher chest protectors; knee/elbow pads; hip pads; wall padding; shoe inserts and orthotics; heels/soles for athletic shoes; a cushioning layer for bedding, and vehicle seats.

## Patentansprüche

1. Ultrastark rückstellfähig komprimierbare Einlage, umfassend:
eine erste Schicht mehrerer weitgehend paralleler Längsgarne,
eine zweite Schicht einer elastisch vliesstoffförmig extrudierten Folie auf einer Seite der ersten Schicht, wobei die vliesstoffförmig extrudierte Folie in Richtung ihrer Dicke elastisch und rückstellfähig komprimierbar und in ihren Längs- und Querrichtungen rückstellfähig dehnbar und biegbar ist,
eine dritte Schicht mehrerer weitgehend paralleler Garne auf der der ersten Schicht gegenüberliegenden Seite der zweiten Schicht, die in die gleiche Richtung wie die der ersten Schicht verlaufen, und
wobei die parallelen Garne der dritten Schicht so ausgerichtet sind, dass sie zwischen den zwischen den parallelen Garnen der ersten Schicht geschaffenen Räumen einnisten.

2. Ultrastark rückstellfähige Einlage nach Anspruch 1, bei der die dritte Schicht über weniger Garne als die erste Schicht verfügt oder umgekehrt.

3. Ultrastark rückstellfähige Einlage nach einem der vorhergehenden Ansprüche, ferner umfassend:
eine vierte Schicht der elastisch vliesstoffförmig extrudierten Folie auf der der zweiten Schicht gegenüberliegenden Seite der dritten Schicht sowie
eine fünfte Schicht paralleler Garne richtungsgleich mit der ersten Schicht, wobei die Garne der fünften Schicht in Dickenrichtung in der gleichen vertikalen Ebene ausgerichtet sind, wie sie der ersten Schicht entspricht.

4. Ultrastark rückstellfähige Einlage nach Anspruch 1, ferner umfassend:
eine oder mehr als eine Schicht mehrerer weitgehend paralleler Quergarne in Anbringung auf oder unter der einen oder mehr als einen Schicht paralleler Längsgarne.

5. Ultrastark rückstellfähige Einlage nach einem der vorhergehenden Ansprüche, bei der die Längs- und/oder Quergarne ausgewählt sind aus der Gruppe bestehend aus Monofilamenten, Multifilamenten, gefachten Monofilamenten oder Multifilamenten, umwickelten Elementen verschiedener Materialien, maschenwarenförmigen Elementen, gedrehten Elementen, multikomponentigen Elementen sowie geflochtenen Elementen.

6. Ultrastark rückstellfähige Einlage nach einem der vorhergehenden Ansprüche, bei der die elastisch vliesstoffförmig extrudierte Folie ein polymeres Material umfasst.

7. Ultrastark rückstellfähige Einlage nach Anspruch 6, bei der das polymere Material ausgewählt ist aus der Gruppe bestehend aus einem Polyurethan, einem Kautschuk sowie Silicon.

8. Ultrastark rückstellfähige Einlage nach einem der vorhergehenden Ansprüche, bei der die Längs- und/oder Quergarne über einen Querschnitt verfügen, der ausgewählt ist aus der Gruppe bestehend aus: kreisförmig, nicht kreisförmig, quadratisch, rechteckig, dreieckig, elliptisch, vieleckig, trapezförmig sowie gelappt.

9. Ultrastark rückstellfähige Einlage nach einem der vorhergehenden Ansprüche, bei der die elastisch vliesstoffförmig extrudierte Folie mit mehreren Durchgangslöchern perforiert ist.

10. Ultrastark rückstellfähige Einlage nach Anspruch 9, bei der die Durchgangslöcher über ein Profil verfügen, das ausgewählt ist aus der Gruppe bestehend aus: kreisförmig, nicht kreisförmig, quadratisch, rechteckig, dreieckig, elliptisch, vieleckig, trapezförmig sowie gelappt.

11. Ultrastark rückstellfähige Einlage nach einem der vorhergehenden Ansprüche, ferner umfassend:
eine oder mehr als eine Schicht eines Vliesstoffs.

12. Ultrastark rückstellfähige Einlage nach Anspruch 11, bei der der Vliesstoff darin eingenadelt ist.

13. Ultrastark rückstellfähige Einlage nach Anspruch 11, bei der der Vliesstoff darauf ober- und/oder unterseitig aufgebracht und hindurchgenadelt ist.

14. Ultrastark rückstellfähige Einlage nach Anspruch 4, bei der die Längs- und/oder Quergarne über einen Garndurchmesser im Bereich von 0,08-4,0 mm verfügen.

15. Ultrastark rückstellfähige Einlage nach Anspruch 4, bei der die eine oder mehr als eine Schicht der Längs- und/oder Quergarne mit der einen oder mehr als einen Schicht der vliesstoffförmig extrudierten Folie thermisch verschweißt oder verklebt ist.

16. Ultrastark rückstellfähige Einlage nach Anspruch 1, ferner umfassend:
eine vierte Schicht mehrerer weitgehend paralleler Quergarne,
eine fünfte Schicht der elastisch vliesstoffförmig extrudierten Folie,
eine sechste Schicht mehrerer weitgehend paralleler Quergarne in Absetzung in den Räumen zwischen den Garnen der vierten Schicht sowie
eine siebte Schicht der elastisch vliesstoffförmig extrudierten Folie.

17. Ultrastark rückstellfähige Einlage nach Anspruch 1 oder 16, bei der die Schichten der ultrastark rückstellfähigen Einlage unter Verwendung einer oder mehr als einer Schicht eines Vliesstoffs miteinander vernadelt sind.

18. Ultrastark rückstellfähige Einlage nach Anspruch 1 oder 16, bei der die Schichten der ultrastark rückstellfähigen Einlage miteinander verbunden sind, indem eine oder mehr als eine Schicht eines Vliesstoffs hindurchgenadelt und der Vliesstoff wenigstens teilweise zum Schmelzen gebracht wird.

19. Ultrastark rückstellfähige Einlage nach Anspruch 1 oder 16, die ober- und/oder unterseitig mit polymerem Harzmaterial, Schaumstoff oder teil- oder vollverschweißten Partikeln beschichtet ist.

20. Ultrastark rückstellfähige Einlage nach Anspruch 19 mit zumindest Teilimprägnierung durch das polymere Harz.

21. Ultrastark rückstellfähige Einlage nach Anspruch 1 oder 16, bei der die vliesstoffförmig extrudierte Schicht ein- oder beidseitig durchlaufend genutet ist.

22. Ultrastark rückstellfähige Einlage nach Anspruch 21, bei der die Nuten über ein Querschnittsprofil verfügen, das ausgewählt ist aus der Gruppe bestehend aus halbkreisförmig, quadratisch, rechteckig, dreieckig, elliptisch, trapezförmig, sechseckig sowie anderweitig vieleckig.

23. Verfahren zur Herstellung einer ultrastark rückstellfähig komprimierbaren Einlage, umfassend die Schritte:
Bereitstellen einer ersten Schicht mehrerer weitgehend paralleler Längsgarne,
Anbringen einer zweiten Schicht einer elastisch vliesstoffförmig extrudierten Folie auf einer Seite der ersten Schicht, wobei die vliesstoffförmig extrudierte Folie in Richtung ihrer Dicke elastisch und rückstellfähig komprimierbar und in ihren Längs- und Querrichtungen rückstellfähig dehnbar und biegbar ist sowie
Anbringen einer dritten Schicht mehrerer weitgehend paralleler Garne auf der der ersten Schicht gegenüberliegenden Seite der zweiten Schicht, die in die gleiche Richtung wie die der ersten Schicht verlaufen, und
wobei die parallelen Garne der dritten Schicht so ausgerichtet sind, dass sie zwischen den zwischen den parallelen Garnen der ersten Schicht geschaffenen Räumen einnisten.

24. Verfahren nach Anspruch 23, ferner umfassend die Schritte:
Aufbringen einer vierten Schicht der elastisch vliesstoffförmig extrudierten Folie auf der der zweiten Schicht gegenüberliegenden Seite der dritten Schicht sowie
Anbringen einer fünften Schicht paralleler Garne richtungsgleich mit der ersten Schicht, wobei die Garne der fünften Schicht in Dickenrichtung in der gleichen vertikalen Ebene ausgerichtet werden, wie sie der ersten Schicht entspricht.

25. Verfahren nach Anspruch 23 oder 24, ferner umfassend den Schritt
Anbringen einer oder mehr als einer Schicht mehrerer weitgehend paralleler Quergarne auf oder unter der einen oder mehr als einen Schicht paralleler Längsgarne.

26. Verfahren nach einem der Ansprüche 23 bis 25, bei dem die elastisch vliesstoffförmig extrudierte Folie mit mehreren Durchgangslöchern perforiert wird.

27. Verfahren nach Anspruch 23 ferner umfassend den Schritt
Aufbringen einer oder mehr als einer Schicht eines Vliesstoffs ober- und/oder unterseitig auf der ultrastark rückstellfähigen Einlage.

28. Verfahren nach Anspruch 27, ferner umfassend den Schritt
Durchnadeln des Vliesstoffs in die ultrastark rückstellfähige Einlage.

29. Verfahren nach Anspruch 27 oder 28, ferner umfassend den Schritt,
die ultrastark rückstellfähige Einlage ober- und/oder unterseitig mit einem polymeren Harz, Schaumstoff oder mit teil- oder vollverschweißten Partikeln beschichten.

30. Verfahren nach Anspruch 29, bei dem die ultrastark rückstellfähige Einlage durch das polymere Harz zumindest teilimprägniert wird.

31. Verfahren nach einem der Ansprüche 27 bis 30, ferner umfassend den Schritt
Anbringen der einen oder mehr als einen Schicht der Längs- und/oder Quergarne auf der einen oder mehr als einen Schicht der vliesstoffförmig extrudierten Folie durch thermisches Verschweißen oder Verkleben.

32. Verfahren nach einem der Ansprüche 27 bis 30, ferner umfassend den Schritt
Anbringen der einen oder mehr als einen Schicht der Längs- und/oder Quergarne auf der einen oder mehr als einen Schicht der vliesstoffförmig extrudierten Folie durch Hindurchnadeln mit einer oder mehr als einer Schicht eines Vliesstoffs.

33. Verfahren nach Anspruch 23, ferner umfassend die Schritte:
auf der dritten Schicht eine vierte Schicht mehrerer weitgehend paralleler Quergarne aufbringen,
auf der vierten Schicht eine fünfte Schicht der elastisch vliesstoffförmig extrudierten Folie aufbringen,
auf der fünften Schicht eine sechste Schicht mehrerer weitgehend paralleler Quergarne in Absetzung in den Räumen zwischen Garnen der vierten Schicht aufbringen sowie
auf der sechsten Schicht eine siebte Schicht der elastisch vliesstoffförmig extrudierten Folie aufbringen.

34. Verfahren nach Anspruch 33, ferner umfassend den Schritt,
die Schichten der ultrastark rückstellfähigen Einlage durch Hindurchnadeln einer oder mehr als einer Schicht eines Vliesstoffs miteinander verbinden.

35. Verfahren nach Anspruch 33, ferner umfassend den Schritt,
die Schichten der ultrastark rückstellfähigen Einlage durch Aufbringen einer oder mehr als einer Schicht eines Vliesstoffs und zumindest teilweises Schmelzen des Vliesstoffs verbinden.

36. Verfahren nach Anspruch 33, ferner umfassend den Schritt,
die ultrastark rückstellfähige Einlage ober- und/oder unterseitig mit einem polymeren Harzmaterial, Schaumstoff oder mit teil- oder vollverschweißten Partikeln beschichten.

37. Ultrastark rückstellfähige Einlage gemäß einem der Ansprüche 1 bis 22 als Produktbestandteil oder Produkt ausgewählt aus der Produktgruppe umfassend Fußbekleidung, Schuhe, Sportschuhe, Stiefel, Bodenbelag, Teppiche, Teppicheinlagen, Sportböden, Automobilteile, Komposite, Blindböden, Turnhallenblindböden, Sportarenenblindböden, Presspolster, ballistisch resistentes Tuch, Körperpanzerung, Orkanfensterschutz, Polsterung, Sportausrüstungspolsterung, Baseballfänger-Brustschutz, Knie/Ellbogen-Polster, Hüftpolster, Wandpolsterung, Schuheinlagen und orthopädische Einlagen, Absätze/Sohlen für Sportschuhe, eine Polsterschicht für Bettwaren sowie Fahrzeugsitze.

## Revendications

1. Matelas ultra-résilient compressible, comprenant :
une première couche constituée d'une pluralité de fils longitudinaux sensiblement parallèles ;
une deuxième couche constituée d'un film ou d'une feuille extrudé(e) non tissé(e) élastique sur un côté de la première couche, le film ou la feuille extrudé(e) non tissé(e) étant élastique, résilient(e) et compressible dans une direction d'épaisseur, et extensible, pliable et résilient(e) dans ses directions longitudinale et transversale ;
une troisième couche constituée d'une pluralité de fils sensiblement parallèles sur le côté de la deuxième couche opposé à la première couche et s'étendant dans la même direction que ceux de la première couche, et
dans lequel les fils parallèles de la troisième couche sont alignés de telle sorte qu'ils se logent entre les espaces créés entre les fils parallèles de la première couche.

2. Matelas ultra-résilient selon la revendication 1, dans lequel le nombre de fils dans la troisième couche est inférieur au nombre de fils dans la première couche ou vice versa.

3. Matelas ultra-résilient selon l'une des revendications précédentes, comprenant en outre :
une quatrième couche constituée du film ou de la feuille extrudé(e) non tissé(e) élastique sur le côté de la troisième couche opposé à la deuxième couche ; et
une cinquième couche constituée de fils parallèles s'étendant dans la même direction que la première couche, les fils de la cinquième couche étant alignés dans le même plan vertical dans une direction d'épaisseur comme celle de la première couche.

4. Matelas ultra-résilient selon la revendication 1, comprenant en outre :
une ou plusieurs couches constituées d'une pluralité de fils sensiblement parallèles s'étendant dans la direction transversale, fixées sur le dessus ou le dessous desdites une ou plusieurs couches de fils parallèles s'étendant dans la direction longitudinale.

5. Matelas ultra-résilient selon l'une des revendications précédentes, dans lequel :
les fils s'étendant dans la direction longitudinale et/ou dans la direction transversale sont sélectionnés dans le groupe constitué de monofilaments, de multifilaments, de monofilaments ou multifilaments retors, d'éléments enveloppés comprenant différents matériaux, d'éléments tricotés, d'éléments torsadés, d'éléments à plusieurs composants, et d'éléments tressés.

6. Matelas ultra-résilient selon l'une des revendications précédentes, dans lequel le film ou la feuille extrudé(e) non tissé(e) élastique comprend un matériau polymère.

7. Matelas ultra-résilient selon la revendication 6, dans lequel le matériau polymère est sélectionné dans le groupe constitué d'un polyuréthane, d'un caoutchouc et d'une silicone.

8. Matelas ultra-résilient selon l'une des revendications précédentes, dans lequel les fils s'étendant dans la direction longitudinale et/ou dans la direction transversale ont une section transversale sélectionnée dans le groupe constitué de sections transversales circulaires, non circulaires, carrées, rectangulaires, triangulaires, elliptiques, polygonales, trapézoïdales, et lobées.

9. Matelas ultra-résilient selon l'une des revendications précédentes, dans lequel le film ou la feuille extrudé(e) non tissé(e) élastique est perforé(e) avec une pluralité de trous traversants.

10. Matelas ultra-résilient selon la revendication 9, dans lequel les trous traversants ont une forme sélectionnée dans le groupe constitué de formes circulaires, non circulaires, carrées, rectangulaires, triangulaires, elliptiques, trapézoïdales, polygonales, et lobées.

11. Matelas ultra-résilient selon l'une des revendications précédentes, comprenant en outre une ou plusieurs couches constituées d'un matériau sous forme de nappe fibreuse.

12. Matelas ultra-résilient selon la revendication 11, dans lequel le matériau sous forme de nappe fibreuse est introduit par aiguilletage dans le matelas ultra-résilient.

13. Matelas ultra-résilient selon la revendication 11, dans lequel le matériau sous forme de nappe fibreuse est appliqué sur une surface supérieure et/ou inférieure du matelas ultra-résilient, et introduit par aiguilletage dans ladite surface.

14. Matelas ultra-résilient selon la revendication 4, dans lequel les fils s'étendant dans la direction longitudinale et/ou dans la direction transversale ont un diamètre de fil de 0,08 à 4,0 mm.

15. Matelas ultra-résilient selon la revendication 4, dans lequel lesdites une ou plusieurs couches de fils s'étendant dans la direction longitudinale et/ou dans la direction transversale sont thermosoudées ou collées auxdites une ou plusieurs couches de film ou de feuille extrudé(e) non tissé (e).

16. Matelas ultra-résilient selon la revendication 1, comprenant en outre :
une quatrième couche constituée d'une pluralité de fils transversaux sensiblement parallèles ;
une cinquième couche constituée du film ou de la feuille extrudé(e) non tissé(e) élastique ;
une sixième couche constituée d'une pluralité de fils sensiblement parallèles s'étendant dans la direction transversale qui sont décalés dans les espaces entre les fils de la quatrième couche ; et
une septième couche constituée du film ou de la feuille extrudé(e) non tissé(e) élastique.

17. Matelas ultra-résilient selon la revendication 1 ou 16, dans lequel les couches du matelas ultra-résilient sont assemblées par aiguilletage en utilisant une ou plusieurs couches d'un matériau sous forme de nappe fibreuse.

18. Matelas ultra-résilient selon la revendication 1 ou 16, dans lequel les couches du matelas ultra-résilient sont fixées les unes aux autres en y introduisant par aiguilletage une ou plusieurs couches d'un matériau sous forme de nappe fibreuse, et en faisant fondre au moins en partie le matériau sous forme de nappe.

19. Matelas ultra-résilient selon la revendication 1 ou 16, dans lequel une surface supérieure et/ou inférieure du matelas ultra-résilient est revêtue d'un matériau sous forme de résine polymère, d'une mousse, ou de particules en partie ou entièrement fondues.

20. Matelas ultra-résilient selon la revendication 19, dans lequel la résine polymère imprègne au moins en partie le matelas ultra-résilient.

21. Matelas ultra-résilient selon la revendication 1 ou 16, dans lequel la couche extrudée non tissée comporte des rainures continues formées sur l'une de ses surfaces ou sur ses deux surfaces.

22. Matelas ultra-résilient selon la revendication 21, dans lequel les rainures ont une forme de section transversale sélectionnée dans le groupe constitué de formes en demi-cercle, carrées, rectangulaires, triangulaires, elliptiques, trapézoïdales, hexagonales et d'autres formes polygonales.

23. Procédé de fabrication d'un matelas ultra-résilient compressible, le procédé comprenant les étapes qui consistent à :
fournir une première couche constituée d'une pluralité de fils longitudinaux sensiblement parallèles ;
fixer une deuxième couche constituée d'un film ou d'une feuille extrudé(e) non tissé(e) élastique sur un côté de la première couche, le film ou la feuille extrudé(e) non tissé (e) étant élastique, résilient (e) et compressible dans une direction d'épaisseur, et extensible, pliable et résilient(e) dans ses directions longitudinale et transversale ; et
fixer une troisième couche constituée d'une pluralité de fils sensiblement parallèles sur le côté de la deuxième couche opposé à la première couche et s'étendant dans la même direction que ceux de la première couche,
dans lequel les fils parallèles de la troisième couche sont alignés de telle sorte qu'ils se logent entre les espaces créés entre les fils parallèles de la première couche.

24. Procédé selon la revendication 23, comprenant en outre les étapes qui consistent à :
appliquer une quatrième couche constituée du film ou de la feuille extrudé(e) non tissé(e) élastique sur le côté de la troisième couche opposé à la deuxième couche ; et
fixer une cinquième couche constituée de fils parallèles s'étendant dans la même direction que la première couche, les fils de la cinquième couche étant alignés dans le même plan vertical dans une direction d'épaisseur comme celle de la première couche.

25. Procédé selon la revendication 23 ou 24, comprenant en outre l'étape qui consiste à fixer une ou plusieurs couches constituées d'une pluralité de fils sensiblement parallèles s'étendant dans la direction transversale sur le dessus ou le dessous desdites une ou plusieurs couches de fils parallèles s'étendant dans la direction longitudinale.

26. Procédé selon l'une des revendications 23 à 25, dans lequel le film ou la feuille extrudé(e) non tissé(e) élastique est perforé(e) avec une pluralité de trous traversants.

27. Procédé selon la revendication 23, comprenant en outre l'étape qui consiste à appliquer une ou plusieurs couches d'un matériau sous forme de nappe fibreuse sur une surface supérieure et/ou inférieure du matelas ultra-résilient.

28. Procédé selon la revendication 27, comprenant en outre l'étape qui consiste à introduire le matériau sous forme de nappe fibreuse dans le matelas ultra-résilient par aiguilletage.

29. Procédé selon la revendication 27 ou 28, comprenant en outre l'étape qui consiste à revêtir une surface supérieure et/ou inférieure du matelas ultra-résilient d'une résine polymère, d'une mousse, ou de particules en partie ou entièrement fondues.

30. Procédé selon la revendication 29, dans lequel la résine polymère imprègne au moins en partie le matelas ultra-résilient.

31. Procédé selon l'une des revendications 27 à 30, comprenant en outre l'étape qui consiste à fixer lesdites une ou plusieurs couches de fils s'étendant dans la direction longitudinale et/ou dans la direction transversale auxdites une ou plusieurs couches de film ou de feuille extrudé(e) non tissé(e) par thermosoudage ou collage.

32. Procédé selon l'une des revendications 27 à 30, comprenant en outre l'étape qui consiste à fixer lesdites une ou plusieurs couches de fils s'étendant dans la direction longitudinale et/ou dans la direction transversale auxdites une ou plusieurs couches de film ou de feuille extrudé(e) non tissé(e) en y introduisant par aiguilletage une ou plusieurs couches d'un matériau sous forme de nappe fibreuse.

33. Procédé selon la revendication 23, comprenant en outre les étapes qui consistent à :
appliquer une quatrième couche constituée d'une pluralité de fils transversaux sensiblement parallèles sur le dessus de la troisième couche ;
appliquer une cinquième couche du film ou de la feuille extrudé(e) non tissé(e) élastique sur le dessus de la quatrième couche ;
appliquer une sixième couche constituée d'une pluralité de fils sensiblement parallèles s'étendant dans la direction transversale qui sont décalés dans les espaces entre les fils de la quatrième couche sur le dessus de la cinquième couche ; et
appliquer une septième couche constituée du film ou de la feuille extrudé(e) non tissé(e) élastique sur le dessus de la sixième couche.

34. Procédé selon la revendication 33, comprenant en outre l'étape qui consiste à fixer les couches du matelas ultra-résilient les unes aux autres en y introduisant par aiguilletage une ou plusieurs couches d'un matériau sous forme de nappe fibreuse.

35. Procédé selon la revendication 33, comprenant en outre l'étape qui consiste à fixer les couches du matelas ultra-résilient en appliquant une ou plusieurs couches d'un matériau sous forme de nappe fibreuse, et en fondant au moins en partie le matériau sous forme de nappe.

36. Procédé selon la revendication 33, comprenant en outre l'étape qui consiste à revêtir une surface supérieure et/ou inférieure du matelas ultra-résilient d'un matériau sous forme de résine polymère, d'une mousse, ou de particules en partie ou entièrement fondues.

37. Matelas ultra-résilient selon l'une des revendications 1 à 22, le matelas étant inclus dans ou étant un produit sélectionné dans le groupe de produits comprenant des articles chaussants ; des chaussures ; des chaussures de sport ; des bottes ; des revêtements de sols ; des tapis ; des tapis sur thibaude ; des planchers de sport ; des pièces automobiles ; des composites ; des sous-planchers ; des sous-planchers de gymnases ; des sous-planchers de terrains de sport ; des tampons de presses ; des étoffes balistiques ; des vêtements blindés ; des protections pour fenêtres contre les ouragans ; des capitonnages ; des capitonnages d'équipements sportifs ; des protections thoraciques pour les batteurs de base-ball ; des protections matelassées pour les genoux/coudes ; des protections matelassées pour les hanches ; des revêtements matelassés pour les murs ; des semelles intérieures de chaussures et des orthèses ; des talons/semelles pour les chaussures de sport ; une couche de rembourrage pour la literie ; et des sièges de véhicules.
